# EUROPEAN PATENT APPLICATION

(11) **EP 2 921 874 A1**
(43) Date of publication of application: **23.09.2015**
(21) Application number: 14250045.3
(22) Date of filing: 17.03.2014
(51) Int. Cl.: G01S 3/80

(54) **Sonar arrays**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

In a passive sonar array the signals from the sound receiving elements (10₁...10ₘ) are analysed to look for discrete tones corresponding to separate targets or objects of interest in a monitored scene. Having identified a plurality of n tones, the tones from each sound receiving element are filtered (14₁...14ₙ; 24₁...24ₙ etc) and fed to separate beamformers 10₁...10ₘ which enable the bearings of each target to be estimated.

## Description

This invention relates to sonar arrays and in particular to passive sonar arrays.

A passive sonar array system monitors an underwater scene and listens for sounds or tones emitted by an object of interest or target, and provides an indication of the location of the object of interest relative to the array, typically in terms of the bearing of the object relative to the array.

It is important in such systems to be able to determine accurately the location of the object, and also to be able to discriminate and locate multiple objects in the scene. The accuracy with which the location can be determined depends both on the beamwidth of the sonar (with narrower beams generally improving accuracy), and the signal to background ratio of the signals received by the sound receiving elements of the sonar array (with improved signal to background enabling improved location accuracy).

The beamwidth of the array is inversely proportional to the length of the array. Thus, where possible, typical sonar arrays are of extended length, arranged for example as a flank array on a platform such as a submarine, ship, or towed array.

In conventional passive sonar flank arrays the signals from the sound receiving elements are initially processed to form beams using wide-band true-time delay techniques. The beamforming of the wideband signal is perceived to be important as it allows the system to suppress own-ship noise by appropriate shaping of the beam. After beamforming frequency analysis is conducted on each beam to analyse the signature of the target. This conventional approach is suitable for conventional length flank arrays, but we anticipate that future requirements will be for smaller submarines or other water borne platforms and there is therefore a need to shorten the length of the sonar array. However, the accuracy with which the bearing of individual sources may be estimated is limited by the beamwidth, which is broader for short flank arrays, and this also means that multiple sources in a monitored scene may be unresolved. There is therefore a need for improved sonar systems and methods which enable shortened flank or more compact arrays to improve the bearing accuracies available using conventional processing techniques, and/or to allow existing length arrays to achieve greater location accuracy.

Accordingly, in one aspect, this invention provides a method of processing the outputs of an array of sound receiving elements configured in use to monitor a scene containing one or more objects of interest, the or each objects of interest emitting a sound signal that includes a respective frequency component, the method comprising:
identifying a frequency component corresponding to a possible object of interest in said scene;
selecting from the output of each of said sound receiving elements a signal portion corresponding to said given frequency component and passing the signal portion selected from each of said sound receiving elements to a beamforming arrangement to obtain an estimate of the location of the object of interest relative to said array.

By this arrangement the signal portions from each of the sound receiving elements corresponding to a possible object of interest are extracted from the remainder of the signal, thereby improving subsequent estimation of the location e.g the bearing of the object of interest.

Although the invention contemplates an arrangement for determining the location a single object, in many cases the system will operate to detect the location of several objects. Thus, where the scene contains a plurality of objects of interest said identifying step may identify for each object of interest a respective frequency component, and said selecting step may select for each object of interest a respective signal portion, and selectively passing the selected signal portions for each given object of interest to a beamforming arrangement to obtain for each object of interest an estimate of its location relative to said array.

In the preferred disclosed methods the normal order of processing is reversed, so that discrete frequency components (otherwise referred to as tones) arising from separate targets or objects are identified, and then those frequency components are selected or extracted and isolated from the remainder of the signal and the other tones. This selection improves the signal to noise ratio which is beneficial for subsequent beamforming and location of the objects. In the beamforming each beam contains only one object source or target, and so no resolution of multiple sources is necessary.

Conveniently said signal portions may be obtained by filtering the outputs of said sound receiving elements.

The signal portions corresponding to said objects of interest may be selected in parallel or sequentially. Likewise in one embodiment the selected signal portions are passed to a plurality of respective beamforming arrangements, but it is also possible instead to pass the selected signal portions are passed in sequence to a common beamforming arrangement for processing sequentially.

Where noise sources are present near the array or elsewhere in the monitored scene, the method may include the step of applying spatial filtering to the outputs of said sound receiving elements to reduce the noise component in the signals prior to selecting the signal portions corresponding to the or each respective object of interest.

In another aspect this invention provides a method of processing the outputs of an array of sound receiving elements configured in use to monitor a scene containing one or more objects of interest (Obj 1, Obj 2...) each emitting a sound signal including a frequency component at or around a respective frequency (F₁, F₂ etc), the method comprising:
analysing the outputs of each of said sound receiving elements to detect the presence of one or more of said frequency components,
selecting from each of said sound receiving elements respective signal portions corresponding to the or each detected frequency component,
for each of the frequency components, passing the corresponding signal portions to a beamforming arrangement to obtain an estimate of the locations of the objects of interest relative to said array.

In yet another aspect this invention provides a sonar array system for obtaining an estimate of the location of an object of interest in a scene, comprising:
an array of sound receiving elements configured to monitor a scene;
a selection arrangement for selecting from each of the outputs of said sound receiving elements at least one signal portion containing a frequency component emitted in use by an object of interest; and
a beamforming arrangement for receiving the said signal portions from each of said sound receiving elements and for determining an estimate of the location of the object in the scene.

Preferably the system is arranged to obtain estimates of the locations of a plurality of objects in said scene, and said selection arrangement selects from each of said sound receiving elements a plurality of signal portions, each signal portion containing a frequency component emitted in use by a respective object of interest, and said beamforming arrangement is configured to receive for each given object of interest the corresponding selected signal portions from each sound receiving element, and to determine estimates of the locations of each of the objects of interest.

Preferably said selection arrangement comprises a plurality of bandpass filters each for passing a respective signal portion corresponding to said frequency component. A common plurality of bandpass filters may be used, or each sound receiving element may be provided with its own plurality of bandpass filters.

The system preferably includes respective beamformers each configured to receive from said selection arrangement the signal portions corresponding to a respective frequency component.

Whilst the invention has been described above, it extends to any inventive combination or sub-combination of the features set out above, or in the following description and accompanying drawings, or the claims.

The invention may be performed in various ways and, by way of example only, one specific embodiment thereof will now be described in detail, reference being made to the accompanying drawings, in which:
Figure 1 is a schematic view of a shortened flank sonar array in accordance with the invention, and
Figure 2 is a flow chart identifying the operations performed in the array of Figure 1.

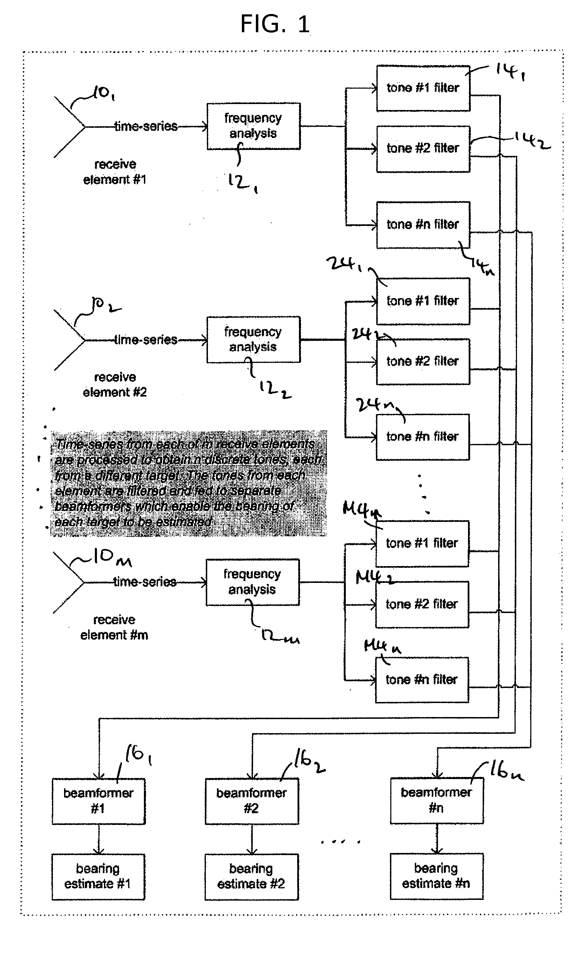

Referring initially to Figure 1, a sonar array comprises an array of sound receiving elements 10₁...10m directed to monitor a scene that may contain several targets or objects of interest each of which emits a distinct tone. Each sound receiving element outputs a time series which is passed to a respective frequency analysis module 12₁...12m which performs a frequency analysis on the time series in order to identify discrete tones in the data arising from separate targets or objects of interest. It is assumed that distinct tones are associated with each target so that separation of the tones effectively separates out each target or object of interest.

Groups of filters 14₁...14n, 24₁...24n, m4₁...m4n etc receive the signals from each sound receiving element, with each filter being set to extract one of the tones from the other tones, to maximise signal to background noise ratio using coherent integration gain. The tones are extracted from each sound receiving element and phase is maintained.

The filtered signals from all the sound receiving elements for a given tone are passed to respective beamformers 16₁...16n which combine the filtered signals in a beamforming operation to give estimates of the bearings of each of the targets or objects of interest emitting tones in the scene. The beamforming of each set of tones may use known beamforming techniques, and may typically implement digital interpolation beamforming for impoved accuracy.

It will be appreciated that each formed beam contains signals from only one target and so no resolution of different sources is necessary. Furthermore, the coherent integration gain should yield high signal to background ratio to allow improved accuracy of bearing estimates, and this allows accurate bearing estimates to be recovered from a short array.

Depending on the nature of the platform on which the array is used, own-ship or self-generated noise or indeed noise from other sources may be significant. For this reason, the arrangement as illustrated may be modified to include initial spatial filtering prior to frequency analysis, for example to steer nulls at the noise.

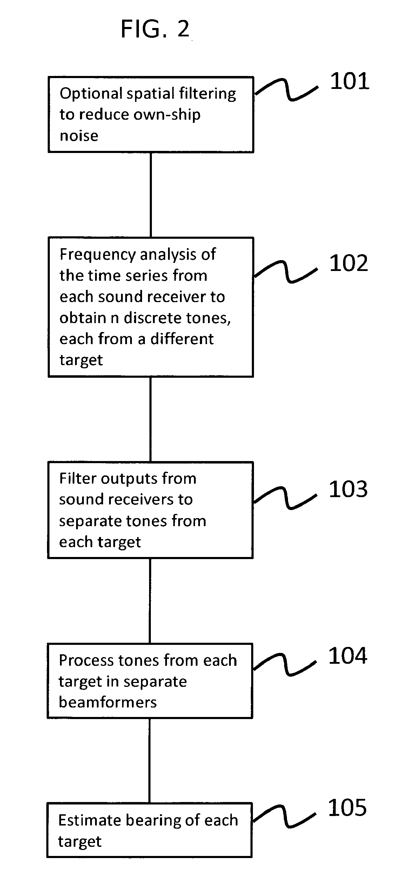

Referring now to Figure 2, in the implementation of the arrangement of Figure 1, the following steps are included. The raw data signals from the sound receiving elements are optionally subjected to an initial spatial filtering step 101 to reduce own ship noise by steering one or more nulls towards the source or sources of noise. The signals from the sound receiving elements are each subjected in step 102 to frequency analysis to identify 'n' discrete tones each corresponding to a different target/object of interest. The information from the frequency analysis in step 103 is used to control a bank of filters for each sound receiving element so as to separate from the signal from each sound receiving elements the tones corresponding to targets/objects of interest. The tones for a particular target/object of interest are combined in a beamforming operation at step 104, and the bearing estimates objected at step 105.

It will be appreciated that, once the frequency analysis has been carried out to identify the tones from the targets/objects of interest, each of the sound receiving element signals may be filtered in parallel and then subjected to beamforming in parallel, so that all the tones are processed simultaneously, or they may be processed in sequential or interleaved fashion.

## Claims

1. A method of processing the outputs of an array of sound receiving elements configured in use to monitor a scene containing one or more objects of interest, the or each object of interest emitting a sound signal that includes a respective frequency component, the method comprising:
identifying a frequency component corresponding to a possible object of interest in said scene;
selecting from the output of each of said sound receiving elements a signal portion corresponding to said given frequency component; and
passing the signal portions selected from each of said sound receiving element to a beamforming arrangement to obtain an estimate of the location of the object of interest relative to said array.

2. A method according to Claim 1, wherein the scene contains a plurality of objects of interest and said identifying step includes identifying for each object of interest a respective frequency component, and said selecting step includes selecting for each object of interest a respective signal portion from the output of each of said sound receiving elements, and passing the selected signal portions for each given object of interest to a beamforming arrangement to obtain for each object of interest an estimate of its location relative to said array.

3. A method according to Claim 2, wherein said signal portions are obtained by filtering the outputs of said sound receiving elements.

4. A method according to Claim 2 or Claim 3, wherein the selection of the signal portions corresponding to said objects of interest is done in parallel.

5. A method according to Claim 4, wherein the selected signal portions are passed to a plurality of respective beamforming arrangements.

6. A method according to any of Claims 2 to 4, wherein the selected signal portions are passed in sequence to a common beamforming arrangement for processing in sequence.

7. A method according to any of the preceding claims which includes the step of applying spatial filtering to the outputs of said sound receiving elements to reduce the noise component in the signals prior to selecting the signal portions corresponding to the or each respective object of interest.

8. A method of processing the outputs of an array of sound receiving elements configured in use to monitor a scene containing one or more objects of interest (Obj 1, Obj 2...) each emitting a sound signal including a frequency component at or around a respective frequency (F₁, F₂ etc), the method comprising:
analysing the outputs of each of said sound receiving elements to detect the presence of one or more of said frequency components,
selecting from each of said sound receiving elements respective signal portions corresponding to the or each detected frequency components,
for each of the frequency components passing the corresponding signal portions to a beamforming arrangement to obtain an estimate of the locations of the objects of interest relative to said array.

9. A sonar array system for obtaining an estimate of the location of an object of interest in a scene, comprising:
an array of sound receiving elements configured to monitor a scene;
a selection arrangement for selecting from each of the outputs of said sound receiving elements at least one signal portion containing a frequency component emitted in use by an object of interest;
a beamforming arrangement for receiving the said signal portions from each of said sound receiving elements and for determining an estimate of the location of the object in the scene.

10. A system according to Claim 9, for obtaining estimates of the locations of a plurality of objects in said scene, wherein said selection arrangement selects from each of said sound receiving elements a plurality of signal portions, each signal portion containing a frequency component emitted in use by a respective object of interest, and said beamforming arrangement is configured to receive for each given object of interest the corresponding selected signal portions from each sound receiving element, and to determine estimates of the locations of each of the objects of interest.

11. A system according to Claim 10, wherein said selection arrangement comprises a plurality of bandpass filters each for passing a respective signal portion corresponding to said frequency component.

12. A system according to Claim 11, wherein each sound receiving element is provided with a plurality of bandpass filters.

13. A system according to Claim 11 or Claim 12, including respective beamformers each configured to receive from said selection arrangement the signal portions corresponding to a respective frequency component.
